(19)

Europäisches Patentamt
European Patent Office
Office européen des brevets

(11)     EP 3 796 028 B1

(12)                    **EUROPEAN PATENT SPECIFICATION**

(45) Date of publication and mention
of the grant of the patent:
**22.10.2025   Bulletin 2025/43**

(51) International Patent Classification (IPC):
*G01S 5/02* (2010.01)      *G01S 5/00* (2006.01)
*G01C 21/10* (2006.01)     *G01C 21/20* (2006.01)

(21) Application number: **18918812.1**

(22) Date of filing: **17.05.2018**

(52) Cooperative Patent Classification (CPC):
**G01S 5/0294; G01C 21/206; G01S 5/02;**
G01S 2205/02

(86) International application number:
**PCT/CN2018/087199**

(87) International publication number:
**WO 2019/218291 (21.11.2019 Gazette 2019/47)**

(54) **METHOD AND DEVICE USED FOR FILTERING POSITIONING DATA**

ZUR FILTERUNG VON POSITIONIERUNGSDATEN VERWENDETE VERFAHREN UND
VORRICHTUNG

PROCÉDÉ ET DISPOSITIF UTILISÉS POUR FILTRER DES DONNÉES DE POSITIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.03.2021   Bulletin 2021/12**

(73) Proprietor: **Robert Bosch GmbH
70442 Stuttgart (DE)**

(72) Inventors:
• **YU, Huajun
Shanghai 200335 (CN)**
• **CUI, Le
Shanghai 200335 (CN)**
• **WANG, Wei
Shanghai 200335 (CN)**

• **ZHANG, Mingliang
Shanghai 200335 (CN)**

(56) References cited:
WO-A1-2019/033025      CN-A- 103 197 279
CN-A- 104 316 058      CN-A- 104 316 058
CN-A- 104 833 354      CN-A- 105 357 753
CN-A- 105 527 605      CN-A- 106 500 690
US-A1- 2009 243 920     US-A1- 2017 060 810

• ULRICH HAMMES ET AL: "Robust MT Tracking
Based on M-Estimation and Interacting Multiple
Model Algorithm", IEEE TRANSACTIONS ON
SIGNAL PROCESSING, IEEE, USA, vol. 59, no. 7,
1 July 2011 (2011-07-01), pages 3398 - 3409,
XP011480486, ISSN: 1053-587X, DOI: 10.1109/
TSP.2011.2138702

EP 3 796 028 B1

## Description

### Technical field

The present invention relates to the field of positioning, in particular to a method, apparatus and a computer-readable storage medium.

### Background art

Indoor positioning technology is a technology for positioning a target object (e.g. staff or vehicles, etc.) located indoors; according to this technology, multiple signal emission sources are arranged at different positions indoors, then a positioning engine continuously calculates positioning data of the target object according to signals received from more than one of the signal emission sources, and outputs the calculated positioning data. Indoor positioning technology is widely used in many different fields.

Due to obstruction and poor synchronization of the signal emission sources, the positioning data calculated by the positioning engine for indoor positioning often differs from the real position of the target object, and is also not very stable. For this reason, the use of a filter (e.g. a mean filter or Kalman filter, etc.) has already been proposed in the prior art for the purpose of filtering the positioning data outputted by the positioning engine, in order to provide accuracy and robustness of positioning. However, at present, the improvement in accuracy and robustness achieved by this technique of using a filter to filter the positioning data outputted by the positioning engine is still not satisfactory.

US 2009/243920 A1 provides a positioning method adapted to perform interactive mixing model calculation (IMM calculation) for combining outputs of a plurality of Kalman filter processes while applying weighting of given model probabilities to the outputs in a positioning apparatus.

US 2017/060810 A1 provides a vehicle system and method are disclosed for the acquisition and transformation of data from vehicle mounted sensors oriented to monitor the environment proximate the vehicle for relevant objects.

Non-patent literature "Robust MT tracking based on M-estimation and interacting multiple model algorithm", published by IEEE, provides algorithm for mobile terminal (MT) tracking based on time-of-arrival measurements in non-line-of-sight (NLOS) environments where NLOS measurements are modeled as positive outliers.

### Summary of the invention

In view of the above problems in the prior art, the embodiments of the present invention provide a method, apparatus and processing device for filtering positioning data, as well as a positioning device and a computer-readable storage medium, which are capable of improving the accuracy and robustness of positioning.

A method for filtering positioning data according to the present invention is provided, as defined by claim 1.

An apparatus for filtering positioning data according to the present invention is provided as defined by independent claim 5.

A machine-readable storage medium according to the present invention is provided as defined by claim 9.

The solution in embodiments of the present invention uses an IMM composed of two filters to filter positioning data outputted by the positioning engine; since the positioning achieved by combining the filtering results of two filters is more accurate and stable than that achieved by a single filter, the solution in embodiments of the present invention can improve the accuracy and robustness of positioning as compared with the prior art.

### Brief description of the drawings

Other features, characteristics, benefits and advantages of the present invention will become more obvious through the following detailed description in conjunction with the drawings, wherein:

Fig. 1 shows a structural schematic diagram of a positioning device according to an embodiment of the present invention.

Fig. 2 shows an overall flow chart of a method for filtering positioning data according to an embodiment of the present invention.

Fig. 3 shows a schematic diagram of a method for filtering positioning data according to an embodiment of the present invention.

Fig. 4 shows a schematic diagram of an apparatus for filtering positioning data according to an embodiment of the present invention.

Fig. 5 shows a schematic diagram of a processing device for filtering positioning data according to an embodiment of the present invention.

Fig. 6 shows a schematic diagram of a positioning device according to an embodiment of the present invention.

## Detailed description of the invention

Various embodiments of the present invention are described in detail below with reference to the drawings.

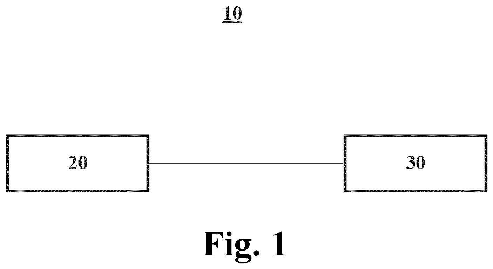

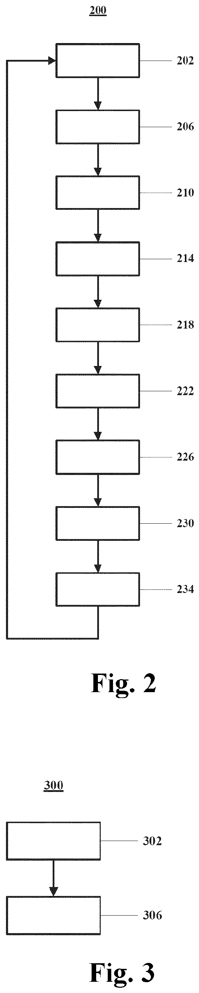

Fig. 1 shows a structural schematic diagram of a positioning device according to an embodiment of the present invention. As shown in fig. 1, the positioning device 10 may comprise a positioning engine 20 and a processing device 30. The positioning engine 20 is configured to continuously calculate positioning data of a target object T located indoors, for example according to signals received from more than one of multiple signal emission sources placed at different positions indoors, and output the calculated positioning data. The processing device 30 is configured to use an interacting multiple model (abbreviated as IMM) P composed of a first order (FO) Kalman filter and a constant velocity (CV) Kalman filter to filter positioning data outputted at each moment by the positioning engine 20, in order to obtain filtered positioning data for each moment; this is explained in detail below with reference to fig. 2.

Fig. 2 shows an overall flow chart of a method for filtering positioning data according to an embodiment of the present invention. The method 200 shown in fig. 2 is implemented by the processing device 30.

As shown in fig. 2, in box 202, the processing device 30 receives positioning data outputted at the current moment by the positioning engine 20. To facilitate description, supposing the current moment is the moment k, the positioning data outputted by the positioning engine 20 at the current moment is expressed as $\hat{X}^k_{measurement}$, which is also called an observation value measured by a hardware system.

In box 206, the processing device 30 subjects the received positioning data $\tilde{X}^k_{measurement}$ to preprocessing, to obtain positioning data $X^k_{measurement}$ to be processed. The objective of preprocessing is to eliminate abnormal positioning data which obviously deviates from recently received positioning data. For example but without limitation, if the positioning data $\hat{X}^k_{measurement}$ is determined as being abnormal positioning data, then the mean value of positioning data received at multiple moments prior to the current moment is calculated as the positioning data $X^k_{measurement}$ to be processed, and if the positioning data $\hat{X}^k_{measurement}$ is determined as being normal positioning data, then the positioning data $X^k_{measurement}$ to be processed is the positioning data $\hat{X}^k_{measurement}$.

In box 210, the processing device 30 uses equation (1) to calculate a proportion $p'^k_1$ of a filtering result of the FO Kalman filter in the IMM P at the current moment (denoting the proportion of the sum of filtering results of the FO Kalman filter and CV Kalman filter in the IMM P at the current moment which is made up by the filtering result of the FO Kalman filter in the IMM P at the current moment) and a proportion $p'^k_2$ of a filtering result of the CV Kalman Filter in the IMM P at the current moment (denoting the proportion of the sum of filtering results of the FO Kalman filter and CV Kalman filter in the IMM P at the current moment which is made up by the filtering result of the CV Kalman filter in the IMM P at the current moment).

$$p'^k_1 = p^{k-1}_1 M_1 + p^{k-1}_2 M_2 \quad , \quad p'^k_2 = p^{k-1}_1 M_2 + p^{k-1}_2 M_1 \quad (1)$$

wherein $M_1$ denotes the Markov chain transfer probability of the FO Kalman filter in the IMM P, $M_2$ denotes the Markov chain transfer probability of the CV Kalman filter in the IMM P, where $M_1$ and $M_2$ are given constants, $p^{k-1}_1$ denotes the probability of the FO Kalman filter being selected by the IMM P at the previous moment (i.e. the moment k-1), $p^{k-1}_2$ denotes the probability of the CV Kalman filter being selected by the IMM P at the previous moment, and $p'^k_1 + p'^k_2 = 1$.

In box 214, the processing device 30 uses equations (2) to respectively calculate a mixed input *InputMixing*$_{A1}$ for the FO Kalman filter in the IMM P and a mixed input *InputMixing*$_{A2}$ for the CV Kalman filter in the IMM P.

$$InputMixing_{A1} = \frac{p_1^{k-1}M_1}{p_1'^k} X_{measurement}^k + \frac{p_2^{k-1}M_2}{p_1'^k} X_{A1\_estimated}^{k-1}$$

$$InputMixing_{A2} = \frac{p_1^{k-1}M_2}{p_2'^k} X_{measurement}^k + \frac{p_2^{k-1}M_1}{p_2'^k} X_{A2\_estimated}^{k-1}$$

$$(2)$$

wherein $X_{A1\_estimated}^{k-1}$ denotes a preliminary filtering result outputted by the FO Kalman filter in the IMM P at the previous moment, and $X_{A2\_estimated}^{k-1}$ denotes a preliminary filtering result outputted by the CV Kalman filter in the IMM P at the previous moment.

In box 218, the processing device 30 uses equations (3) to calculate a positioning data prediction value $\hat{x}_{k|k}^{A1}$ for the FO Kalman filter in the IMM P at the current moment and a positioning data prediction value $\hat{x}_{k|k}^{A2}$ for the CV Kalman filter in the IMM P at the current moment.

$$\hat{x}_{k|k}^{A1} = F_k\hat{x}_{k-1|k-1}^{A1} + K_k(InputMixing_{A1}-HF_k\hat{x}_{k-1|k-1}^{A1})$$

$$\hat{x}_{k|k}^{A2} = F_k\hat{x}_{k-1|k-1}^{A2} + K_k(InputMixing_{A2}-HF_k\hat{x}_{k-1|k-1}^{A2})$$

$$(3)$$

wherein $F_k$ denotes a given and unchanging transfer matrix, $H$ denotes a given and unchanging observation matrix, $\hat{x}_{k-1|k-1}^{A1}$ denotes a positioning data prediction value for the FO Kalman filter in the IMM P at the previous moment, $\hat{x}_{k-1|k-1}^{A2}$ denotes a positioning data prediction value for the CV Kalman filter in the IMM P at the previous moment, $K_k$ denotes a coefficient gain at the current moment, $H_k = \hat{P}_{k|k}H^T(H\hat{P}_{k|k-1}H^T + R)^{-1}$, $R$ denotes a given and unchanging measurement noise covariance, $\hat{P}_{k|k-1}$ denotes an "a priori" covariance matrix at the current moment,

$$\hat{P}_{k|k-1} = F_k\hat{P}_{k-1|k-1}F_k^T + Q$$, $Q$ denotes a given and unchanging processing noise covariance, and $\hat{P}_{k-1|k-1}$ denotes an "a priori" covariance matrix at the previous moment.

In box 222, the processing device 30 uses the FO Kalman filter in the IMM P to filter the positioning data prediction value $\hat{x}_{k|k}^{A1}$, the filtering result thus obtained serving as a preliminary filtering result $X_{A1\_estimated}^k$ of the FO Kalman filter in the IMM P at the current moment, and uses the CV Kalman filter in the IMM P to filter the positioning data prediction value $\hat{x}_{k|k}^{A2}$, the filtering result thus obtained serving as a preliminary filtering result $X_{A2\_estimated}^k$ of the CV Kalman filter in the IMM P at the current moment.

In box 226, the processing device 30 uses equations (4) to calculate a filtering parameter value $eK_{A1}$ for the FO Kalman filter in the IMM P and a filtering parameter value $eK_{A2}$ for the CV Kalman filter in the IMM P.

$$eK_{A1} = e^{\frac{X_{measurement}^k - \hat{x}_{k|k}^{A1}}{0.5P_{noise}(X_{measurement}^k - \hat{x}_{k|k}^{A1})(2\pi\sqrt{P_{noise}})}}$$

$$eK_{A2} = e^{\frac{X_{measurement}^k - \hat{x}_{k|k}^{A2}}{0.5P_{noise}(X_{measurement}^k - \hat{x}_{k|k}^{A2})(2\pi\sqrt{P_{noise}})}}$$

$$(4)$$

wherein $P_{noise}$ denotes a given and unchanging measurement noise covariance.

In box 230, the processing device 30 uses equations (5) to calculate the probability $p_1^k$ of the FO Kalman filter being selected by the IMM P at the current moment and the probability $p_2^k$ of the CV Kalman filter being selected by the IMM P at the current moment.

$$p_1^k = \frac{eK_{FO} * p_1'^k}{eK_{FO} * p_1'^k + eK_{CV} * p_2'^k} , \quad p_2^k = \frac{eK_{CV} * p_2'^k}{eK_{FO} * p_1'^k + eK_{CV} * p_2'^k} \quad (5)$$

In box 234, the processing device 30 uses equation (6) to calculate a filtering output Output of the IMM P, as a filtering result of the IMM P for the positioning data to be processed $X_{measuremen}^k$ at the current moment.

$$Output = p_1^k X_{A1\_estimated}^k + p_2^k X_{A2\_estimated}^k \quad (6)$$

Next, after box 234, the procedure returns to box 202, in order to filter positioning data $\hat{X}_{measuremen}^{k+1}$ outputted by the positioning engine at the next moment (i.e. moment k+1).

The solution of this embodiment uses an IMM composed of two filters (i.e. the FO Kalman filter and CV Kalman filter) to filter positioning data outputted by the positioning engine; since the positioning achieved by combining the filtering results of two filters is more accurate and stable than that achieved by a single filter, the solution of this embodiment can improve the accuracy and robustness of positioning.

Other variants

Those skilled in the art will understand that although the positioning data prediction value for the FO Kalman filter in the IMM P at the current moment and the positioning data prediction value for the CV Kalman filter in the IMM P at the current moment are calculated using equations (3) in the above embodiment, the present invention is not limited to this. In other embodiments of the present invention, it is also possible for the filtering parameter value $eK_{A1}$ for the FO Kalman filter in the IMM P, calculated using equations (4), to serve as the positioning data prediction value for the FO Kalman filter in the IMM P at the current moment, and the filtering parameter value $eK_{A2}$ for the CV Kalman filter in the IMM P, calculated using equations (4), to serve as the positioning data prediction value for the CV Kalman filter in the IMM P at the current moment;

in this case, $\hat{X}_{k|k}^{A1}$ and $\hat{X}_{k|k}^{A2}$ calculated using equations (3) are an auxiliary calculation value for the FO Kalman filter in the IMM P at the current moment, and an auxiliary calculation value for the CV Kalman filter in the IMM P at the current moment, respectively.

Those skilled in the art will understand that although the method 200 comprises box 206 to preprocess the received positioning data $\hat{X}_{measuremen}^k$ in the above embodiment, the present invention is not limited to this. In other embodiments of the present invention, the method 200 may not include box 206; in this case, the positioning data to be processed $X_{measuremen}^k$ is the received positioning data $\hat{X}_{measuremen}^k$.

Those skilled in the art will understand that although the IMM P is composed of the FO Kalman filter and CV Kalman filter in the above embodiment, the present invention is not limited to this. In other embodiments of the present invention, the IMM P could for example be composed of either one of the FO Kalman filter and CV Kalman filter, and another filter (e.g. a mean value filter, etc.), or for example composed of two filters other than the FO Kalman filter and CV Kalman filter.

Those skilled in the art will understand that the solution of the present invention is suitable not only for indoor positioning scenarios but also for outdoor positioning scenarios.

Fig. 3 shows a flow chart of a method for filtering positioning data according to an embodiment of the present invention. The method 300 shown in fig. 3 may be implemented by the processing device 30 or another suitable device.

As shown in fig. 3, the method 300 comprises, in box 302, receiving positioning data outputted at a current moment by a positioning engine.

The method 300 further comprises in box 306, using an IMM composed of two different filters to filter positioning data to be processed that is based on the received positioning data, in order to obtain filtered positioning data. Here, the positioning data to be processed may be the received positioning data, or positioning data obtained by preprocessing the received positioning data.

According to the invention, box 306 comprises: acquiring respective preliminary filtering results of the two filters at the current moment, the preliminary filtering results being associated with the positioning data to be processed (for example but without limitation, implemented via boxes 210 - 222); calculating respective probabilities of selection of the two filters at the current moment, wherein the probability of selection of each filter at the current moment represents the probability that the IMM will select said filter at the current moment (for example but without limitation, implemented via boxes 210 - 230); and calculating the sum of the respective products of the preliminary filtering result and probability of selection of each of the two filters at the current moment, to serve as the filtered positioning data (for example but without limitation, calculated using equation (6)).

Further according to the invention, the step of acquiring respective preliminary filtering results of the two filters at the current moment comprises: based on respective Markov chain transfer probabilities of the two filters and respective probabilities of selection of the two filters at a previous moment preceding the current moment, calculating respective filtering result proportions of the two filters at the current moment (for example but without limitation, calculated using equation (1)), wherein the filtering result proportion of either one of the two filters at the current moment represents the proportion of the sum of filtering results of the two filters at the current moment that is made up by the filtering result of said either one of the two filters at the current moment; calculating respective mixed inputs for the two filters (for example but without limitation, calculated using equations (2)), wherein the mixed input for each filter is calculated on the basis of the positioning data to be processed, a preliminary filtering result of said filter at the previous moment, the respective Markov chain transfer probabilities of the two filters, and the respective probabilities of selection of the two filters at the previous moment; calculating a positioning data prediction value for each of the two filters at the current moment (for example but without limitation, calculated using equations (3)); and obtaining respective preliminary filtering results of the two filters at the current moment, by using each of the two filters to filter the positioning data prediction value for said filter at the current moment (for example but without limitation, implemented via box 222).

In a preferred embodiment, the positioning data prediction value for each of the two filters at the current moment is calculated on the basis of a positioning data prediction value for said filter at the previous moment, the calculated mixed input for said filter, a given and unchanging transfer matrix, a given and unchanging observation matrix, and a coefficient gain at the current moment (for example but without limitation, calculated using equations (3)).

In another preferred embodiment, the step of calculating a positioning data prediction value for each of the two filters at the current moment comprises: calculating an auxiliary calculation value for each of the two filters at the current moment, the auxiliary calculation value being calculated on the basis of an auxiliary calculation value for said filter at the previous moment, the calculated mixed input for said filter, a given and unchanging transfer matrix, a given and unchanging observation matrix, and a coefficient gain at the current moment (for example but without limitation, calculated using equations (3)); and determining a positioning data prediction value for each of the two filters at the current moment, the positioning data prediction value being calculated on the basis of the positioning data to be processed, the auxiliary calculation value for said filter at the current moment, and a given and unchanging measurement noise covariance (for example but without limitation, calculated using equations (4)).

In another preferred embodiment, the step of calculating respective probabilities of selection of the two filters at the current moment comprises: calculating respective filtering parameter values for the two filters, wherein the filtering parameter value for each of the two filters is calculated on the basis of the positioning data to be processed, the positioning data prediction value for said filter at the current moment, and a given and unchanging measurement noise covariance (for example but without limitation, calculated using equations (4)); and based on the respective filtering parameter values for the two filters and the respective filtering result proportions of the two filters at the current moment, determining respective probabilities of selection of the two filters at the current moment (for example but without limitation, calculated using equations (5)).

In a sixth aspect, the method 200 may further comprise: preprocessing the received positioning data, to obtain the positioning data to be processed (for example but without limitation, implemented via box 206).

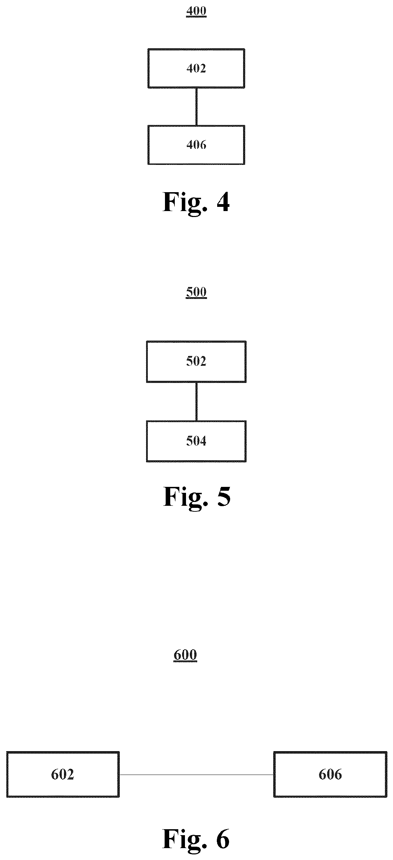

Fig. 4 shows a schematic diagram of an apparatus for filtering positioning data according to an embodiment of the present invention. The apparatus 400 shown in fig. 4 may be implemented using software, hardware or a combination of software and hardware. The apparatus 400 shown in fig. 4 may be installed in the processing device 30 or in another suitable device.

As shown in fig. 4, the apparatus 400 comprises a receiving module 402 and a filtering module 406. The receiving module 402 is configured to receive positioning data outputted by a positioning engine at a current moment. The filtering module 406 is configured to use an IMM composed of two different filters to filter positioning data to be processed that is based on the received positioning data, in order to obtain filtered positioning data.

According to the invention, the filtering module 406 comprises: an acquisition module, for acquiring respective preliminary filtering results of the two filters at the current moment, the preliminary filtering results being associated with the positioning data to be processed; a first calculation module, for calculating respective probabilities of selection of the two filters at the current moment, wherein the probability of selection of each filter at the current moment represents the probability that the IMM will select said filter at the current moment; and a second calculation module, for calculating the sum of the respective products of the preliminary filtering result and probability of selection of each of the two filters at the current moment, to serve as the filtered positioning data.

Further according to the invention, the acquisition module comprises: a third calculation module, for calculating respective filtering result proportions of the two filters at the current moment, based on respective Markov chain transfer probabilities of the two filters and respective probabilities of selection of the two filters at the previous moment preceding the current moment, wherein the filtering result proportion of either one of the two filters at the current moment represents the proportion of the sum of filtering results of the two filters at the current moment that is made up by the filtering result of said either one of the two filters at the current moment; a fourth calculation module, for calculating respective mixed inputs for the two filters, wherein the mixed input for each filter is calculated on the basis of the positioning data to be processed, a preliminary filtering result of said filter at the previous moment, the respective Markov chain transfer probabilities of the two filters, and the respective probabilities of selection of the two filters at the previous moment; a fifth calculation module, for calculating a positioning data prediction value for each of the two filters at the current moment; and an obtaining module, for obtaining respective preliminary filtering results of the two filters at the current moment, by using each of the two filters to filter the positioning data prediction value for said filter at the current moment.

In a preferred embodiment, the positioning data prediction value for each of the two filters at the current moment is calculated on the basis of a positioning data prediction value for said filter at the previous moment, the calculated mixed input for said filter, a given and unchanging transfer matrix, a given and unchanging observation matrix, and a coefficient gain at the current moment.

In another preferred embodiment, the fifth calculation module comprises: a sixth calculation module, for calculating an auxiliary calculation value for each of the two filters at the current moment, the auxiliary calculation value being calculated on the basis of an auxiliary calculation value for said filter at the previous moment, the calculated mixed input for said filter, a given and unchanging transfer matrix, a given and unchanging observation matrix, and a coefficient gain at the current moment; and a first determining module, for determining a positioning data prediction value for each of the two filters at the current moment, the positioning data prediction value being calculated on the basis of the positioning data to be processed, the auxiliary calculation value for said filter at the current moment, and a given and unchanging measurement noise covariance.

In another preferred embodiment, the first calculation module comprises: a seventh calculation module, for calculating respective filtering parameter values for the two filters, wherein the filtering parameter value for each of the two filters is calculated on the basis of the positioning data to be processed, the positioning data prediction value for said filter at the current moment, and a given and unchanging measurement noise covariance; and a second determining module, for determining respective probabilities of selection of the two filters at the current moment, based on the respective filtering parameter values for the two filters and the respective filtering result proportions of the two filters at the current moment.

In another aspect, the apparatus 400 may further comprise: a preprocessing module, for preprocessing the received positioning data, to obtain the positioning data to be processed.

Fig. 5 shows a schematic diagram of a processing device for filtering positioning data according to an embodiment of the present invention. As shown in fig. 5, the processing device 500 may comprise a processor 502, and a memory 504 coupled to the processor 502. The memory 504 stores an executable instruction which, when executed, causes the processor 502 to execute the method 200 shown in fig. 2 or the method 300 shown in fig. 3. The processing device 500 may be realized by the processing device 30 or another suitable device.

An embodiment of the present invention further provides a machine-readable storage medium, having an executable instruction thereon; when the executable instruction is executed, a machine is caused to execute the method 200 shown in fig. 2 or the method 300 shown in fig. 3.

Fig. 6 shows a schematic diagram of a positioning device according to an embodiment not covered by the present invention. As shown in fig. 6, the positioning device 600 may comprise a positioning engine 602 and a processing device 606. The positioning engine 602 continuously calculates positioning data of a target object and outputs the calculated positioning data to the processing device 606; the positioning engine 602 may for example, but without limitation, be realized by the positioning engine 20. The processing device 606 may for example, but without limitation, be realized by the processing device 500.

Those skilled in the art should understand that various alterations, amendments and changes may be made to the embodiments disclosed above without departing from the substance of the invention, and all such alterations, amendments and changes should fall within the scope of protection of the present invention. Thus, the scope of protection of the present invention is defined by the attached claims.

**Claims**

1. Computer implemented method for filtering positioning data, comprising:

   receiving positioning data outputted at a current moment by a positioning engine (20); and
   using an interacting multiple model, IMM, composed of two different filters to filter positioning data to be processed, to obtain filtered positioning data,
   wherein the positioning data to be processed is the received positioning data or positioning data obtained by preprocessing the received positioning data,
   wherein the step of using an IMM composed of two different filters to filter positioning data to be processed comprises:

   acquiring respective preliminary filtering results of the two filters at the current moment, the preliminary filtering results being associated with the positioning data to be processed;
   calculating respective probabilities of selection of the two filters at the current moment, wherein the probability of selection of each filter at the current moment represents the probability that the IMM will select said filter at the current moment; and
   calculating the sum of the respective products of the preliminary filtering result and probability of selection of each of the two filters at the current moment, to serve as the filtered positioning data,
   **characterized in that**
   the step of acquiring respective preliminary filtering results of the two filters at the current moment comprises:

   based on respective Markov chain transfer probabilities of the two filters and respective probabilities of selection of the two filters at a previous moment preceding the current moment, calculating respective filtering result proportions of the two filters at the current moment, wherein the filtering result proportion of either one of the two filters at the current moment represents the proportion of the sum of filtering results of the two filters at the current moment that is made up by the filtering result of said either one of the two filters at the current moment;
   calculating respective mixed inputs for the two filters, wherein the mixed input for each filter is calculated on the basis of the positioning data to be processed, a preliminary filtering result of said filter at the previous moment, the respective Markov chain transfer probabilities of the two filters, and the respective probabilities of selection of the two filters at the previous moment;
   calculating a positioning data prediction value for each of the two filters at the current moment; and
   obtaining respective preliminary filtering results of the two filters at the current moment, by using each of the two filters to filter the positioning data prediction value for said filter at the current moment.

2. Method according to Claim 1, wherein the positioning data prediction value for each of the two filters at the current moment is calculated on the basis of a positioning data prediction value for said filter at the previous moment, the calculated mixed input for said filter, a given and unchanging transfer matrix, a given and unchanging observation matrix, and a coefficient gain at the current moment.

3. Method according to Claim 1, wherein the step of calculating a positioning data prediction value for each of the two filters at the current moment comprises:

   calculating an auxiliary calculation value for each of the two filters at the current moment, the auxiliary calculation value being calculated on the basis of an auxiliary calculation value for said filter at the previous moment, the calculated mixed input for said filter, a given and unchanging transfer matrix, a given and unchanging observation matrix, and a coefficient gain at the current moment; and
   determining a positioning data prediction value for each of the two filters at the current moment, the positioning data prediction value being calculated on the basis of the positioning data to be processed, the auxiliary calculation value for said filter at the current moment, and a given and unchanging measurement noise covariance.

4. Method according to Claim 2, wherein the step of calculating respective probabilities of selection of the two filters at the current moment comprises:

   calculating respective filtering parameter values for the two filters, wherein the filtering parameter value for each of the two filters is calculated on the basis of the positioning data to be processed, the positioning data prediction value for said filter at the current moment, and a given and unchanging measurement noise covariance; and based on the respective filtering parameter values for the two filters and the respective filtering result proportions of the two filters at the current moment, determining respective probabilities of selection of the two filters at the current moment.

5. Apparatus (400) for filtering positioning data, comprising:

a receiving module (402), for receiving positioning data outputted at a current moment by a positioning engine; and
a filtering module (406), for using an interacting multiple model (IMM) composed of two different filters to filter positioning data to be processed, to obtain filtered positioning data,
a preprocessing module, for preprocessing the received positioning data, to obtain the positioning data to be processed,
wherein the filtering module (406) comprises:

an acquisition module, for acquiring respective preliminary filtering results of the two filters at the current moment, the preliminary filtering results being associated with the positioning data to be processed;
a first calculation module, for calculating respective probabilities of selection of the two filters at the current moment, wherein the probability of selection of each filter at the current moment represents the probability that the IMM will select said filter at the current moment; and
a second calculation module, for calculating the sum of the respective products of the preliminary filtering result and probability of selection of each of the two filters at the current moment, to serve as the filtered positioning data,
**characterized in that** the acquisition module (406) comprises:

a third calculation module, for calculating respective filtering result proportions of the two filters at the current moment, based on respective Markov chain transfer probabilities of the two filters and respective probabilities of selection of the two filters at the previous moment preceding the current moment, wherein the filtering result proportion of either one of the two filters at the current moment represents the proportion of the sum of filtering results of the two filters at the current moment that is made up by the filtering result of said either one of the two filters at the current moment;
a fourth calculation module, for calculating respective mixed inputs for the two filters, wherein the mixed input for each filter is calculated on the basis of the positioning data to be processed, a preliminary filtering result of said filter at the previous moment, the respective Markov chain transfer probabilities of the two filters, and the respective probabilities of selection of the two filters at the previous moment;
a fifth calculation module, for calculating a positioning data prediction value for each of the two filters at the current moment; and
an obtaining module, for obtaining respective preliminary filtering results of the two filters at the current moment, by using each of the two filters to filter the positioning data prediction value for said filter at the current moment.

6. Apparatus(400) according to Claim 5, wherein
the positioning data prediction value for each of the two filters at the current moment is calculated on the basis of a positioning data prediction value for said filter at the previous moment, the calculated mixed input for said filter, a given and unchanging transfer matrix, a given and unchanging observation matrix, and a coefficient gain at the current moment.

7. Apparatus(400) according to Claim 5, wherein the fifth calculation module comprises:

a sixth calculation module, for calculating an auxiliary calculation value for each of the two filters at the current moment, the auxiliary calculation value being calculated on the basis of an auxiliary calculation value for said filter at the previous moment, the calculated mixed input for said filter, a given and unchanging transfer matrix, a given and unchanging observation matrix, and a coefficient gain at the current moment; and
a first determining module, for determining a positioning data prediction value for each of the two filters at the current moment, the positioning data prediction value being calculated on the basis of the positioning data to be processed, the auxiliary calculation value for said filter at the current moment, and a given and unchanging measurement noise covariance.

8. Apparatus (400) according to Claim 6, wherein the first calculation module comprises:

a seventh calculation module, for calculating respective filtering parameter values for the two filters, wherein the filtering parameter value for each of the two filters is calculated on the basis of the positioning data to be processed, the positioning data prediction value for said filter at the current moment, and a given and unchanging measurement noise covariance; and

a second determining module, for determining respective probabilities of selection of the two filters at the current moment, based on the respective filtering parameter values for the two filters and the respective filtering result proportions of the two filters at the current moment.

9. Machine-readable storage medium, having an executable instruction thereon; when the executable instruction is executed, a machine is caused to execute the method according to any one of Claims 1 - 4.

**Patentansprüche**

1. Computer-implementiertes Verfahren zur Filterung von Positionierungsdaten, umfassend:

Empfangen von Positionierungsdaten, die zu einem aktuellen Zeitpunkt durch eine Positionierungsmaschine (20) ausgegeben werden; und Verwenden eines interagierenden Mehrfachmodells, IMM, das aus zwei verschiedenen Filtern zusammengesetzt ist, um die zu verarbeitenden Positionierungsdaten zu filtern und gefilterte Positionierungsdaten zu erhalten,

wobei die zu verarbeitenden Positionierungsdaten die empfangenen Positionierungsdaten oder durch Vorverarbeitung der empfangenen Positionierungsdaten erhaltene Positionierungsdaten sind,

wobei der Schritt des Verwendens eines aus zwei verschiedenen Filtern zusammengesetzten IMM zum Filtern der zu verarbeitenden Positionierungsdaten umfasst:

Erfassen von jeweiligen vorläufigen Filterungsergebnissen der beiden Filter zum aktuellen Zeitpunkt, wobei die vorläufigen Filterungsergebnisse mit den zu verarbeitenden Positionierungsdaten verknüpft sind;

Berechnen von jeweiligen Auswahlwahrscheinlichkeiten der beiden Filter zum aktuellen Zeitpunkt, wobei die Auswahlwahrscheinlichkeit jedes Filters zum aktuellen Zeitpunkt die Wahrscheinlichkeit darstellt, dass das IMM den Filter zum aktuellen Zeitpunkt auswählen wird; und

Berechnen der Summe der jeweiligen Produkte aus dem vorläufigen Filterungsergebnis und der Auswahlwahrscheinlichkeit für jeden der beiden Filter zum aktuellen Zeitpunkt, die als gefilterte Positionierungsdaten dienen soll,

**dadurch gekennzeichnet, dass** der Schritt des Erfassens von jeweiligen vorläufigen Filterungsergebnissen der beiden Filter zum aktuellen Zeitpunkt umfasst:

basierend auf jeweiligen Markov-Ketten-Übertragungswahrscheinlichkeiten der beiden Filter und jeweiligen Auswahlwahrscheinlichkeiten der beiden Filter zu einem vorherigen Zeitpunkt, der dem aktuellen Zeitpunkt vorausgeht, Berechnen jeweiliger Filterungsergebnis-Anteile der beiden Filter zum aktuellen Zeitpunkt, wobei der Filterungsergebnis-Anteil eines der beiden Filter zum aktuellen Zeitpunkt den Anteil der Summe der Filterungsergebnisse der beiden Filter zum aktuellen Zeitpunkt darstellt, der durch das Filterungsergebnis des einen der beiden Filter zum aktuellen Zeitpunkt gebildet wird;

Berechnen jeweiliger gemischter Eingänge für die beiden Filter, wobei der gemischte Eingang für jeden Filter basierend auf den zu verarbeitenden Positionierungsdaten, einem vorläufigen Filterungsergebnis des Filters zu dem vorherigen Zeitpunkt, den jeweiligen Markov-Ketten-Übertragungswahrscheinlichkeiten der beiden Filter und den jeweiligen Auswahlwahrscheinlichkeiten der beiden Filter zu dem vorherigen Zeitpunkt berechnet wird;

Berechnen eines Positionierungsdaten-Vorhersagewertes für jeden der beiden Filter zum aktuellen Zeitpunkt;

und

Erhalten von jeweiligen vorläufigen Filterungsergebnissen der beiden Filter zum aktuellen Zeitpunkt, indem jeder der beiden Filter verwendet wird, um den Positionierungsdaten-Vorhersagewert für den betreffenden Filter zum aktuellen Zeitpunkt zu filtern.

2. Verfahren gemäß Anspruch 1, wobei der Positionierungsdaten-Vorhersagewert für jeden der beiden Filter zum aktuellen Zeitpunkt basierend auf einem Positionierungsdaten-Vorhersagewert für den Filter zu dem vorherigen Zeitpunkt, dem berechneten gemischten Eingang für den Filter, einer gegebenen und unveränderlichen Übertragungsmatrix, einer gegebenen und unveränderlichen Beobachtungsmatrix und einem Gewinnkoeffizienten zum aktuellen Zeitpunkt berechnet wird.

3. Verfahren gemäß Anspruch 1, wobei der Schritt des Berechnens eines Positionierungsdaten-Vorhersagewertes für jeden der beiden Filter zum aktuellen Zeitpunkt umfasst:

Berechnen eines Hilfsberechnungswertes für jeden der beiden Filter zum aktuellen Zeitpunkt, wobei der Hilfsberechnungswert basierend auf einem Hilfsberechnungswert für den Filter zu dem vorherigen Zeitpunkt, dem berechneten gemischten Eingang für den Filter, einer gegebenen und unveränderlichen Übertragungsmatrix, einer gegebenen und
unveränderlichen Beobachtungsmatrix und einem Gewinnkoeffizienten zum aktuellen Zeitpunkt berechnet wird; und

Bestimmen eines Positionierungsdaten-Vorhersagewertes für jeden der beiden Filter zum aktuellen Zeitpunkt, wobei der Positionierungsdaten-Vorhersagewert basierend auf den zu verarbeitenden Positionierungsdaten, dem Hilfsberechnungswert für den Filter zum aktuellen Zeitpunkt und einer gegebenen und unveränderlichen Messrauschkovarianz berechnet wird.

4. Verfahren gemäß Anspruch 2, wobei der Schritt des Berechnens der jeweiligen Auswahlwahrscheinlichkeiten der beiden Filter zum aktuellen Zeitpunkt umfasst:

Berechnen jeweiliger Filterparameterwerte für die beiden Filter, wobei der Filterparameterwert für jeden der beiden Filter basierend auf den zu verarbeitenden Positionierungsdaten, dem Positionierungsdaten-Vorhersagewert für den Filter zum aktuellen Zeitpunkt und einer gegebenen und unveränderlichen Messrauschkovarianz berechnet wird; und
basierend auf den jeweiligen Filterparameterwerten für die beiden Filter und den jeweiligen Filterungsergebnis-Anteilen der beiden Filter zum aktuellen Zeitpunkt, Bestimmen der jeweiligen Auswahlwahrscheinlichkeiten der beiden Filter zum aktuellen Zeitpunkt.

5. Einrichtung (400) zur Filterung von Positionierungsdaten, umfassend:

ein Empfangsmodul (402) zum Empfangen von Positionierungsdaten, die zu einem aktuellen Zeitpunkt durch eine Positionierungsmaschine ausgegeben werden; und
ein Filtermodul (406) zum Verwenden eines interagierenden Mehrfachmodells (IMM), das aus zwei verschiedenen Filtern zusammengesetzt ist, um die zu verarbeitenden Positionierungsdaten zu filtern und gefilterte Positionierungsdaten zu erhalten,
ein Vorverarbeitungsmodul zum Vorverarbeiten der empfangenen Positionierungsdaten, um die zu verarbeitenden Positionierungsdaten zu erhalten,
wobei das Filtermodul (406) umfasst:

ein Erfassungsmodul zum Erfassen von jeweiligen vorläufigen Filterungsergebnissen der beiden Filter zum aktuellen Zeitpunkt, wobei die vorläufigen Filterungsergebnisse mit den zu verarbeitenden Positionierungsdaten verknüpft sind;
ein erstes Berechnungsmodul zum Berechnen von jeweiligen Auswahlwahrscheinlichkeiten der beiden Filter zum aktuellen Zeitpunkt, wobei die Auswahlwahrscheinlichkeit jedes Filters zum aktuellen Zeitpunkt die Wahrscheinlichkeit darstellt, dass das IMM den Filter zum aktuellen Zeitpunkt auswählen wird; und
ein zweites Berechnungsmodul zum Berechnen der Summe der jeweiligen Produkte aus dem vorläufigen Filterungsergebnis und der Auswahlwahrscheinlichkeit für jeden der beiden Filter zum aktuellen Zeitpunkt, die als gefilterte Positionierungsdaten dienen soll, **dadurch gekennzeichnet, dass** das Erfassungsmodul (406) umfasst:

ein drittes Berechnungsmodul zum Berechnen jeweiliger Filterungsergebnis-Anteile der beiden Filter zum aktuellen Zeitpunkt, basierend auf jeweiligen Markov-Ketten-Übertragungswahrscheinlichkeiten der beiden Filter und jeweiligen Auswahlwahrscheinlichkeiten der beiden Filter zu dem vorherigen Zeitpunkt, der dem aktuellen Zeitpunkt vorausgeht, wobei der Filterungsergebnis-Anteil eines der beiden Filter zum aktuellen Zeitpunkt den Anteil der Summe der Filterungsergebnisse der beiden Filter zum aktuellen Zeitpunkt darstellt, der durch das Filterungsergebnis des einen der beiden Filter zum aktuellen Zeitpunkt gebildet wird;

ein viertes Berechnungsmodul zum Berechnen jeweiliger gemischter Eingänge für die beiden Filter, wobei der gemischte Eingang für jeden Filter basierend auf den zu verarbeitenden Positionierungsdaten, einem vorläufigen Filterungsergebnis des Filters zu dem vorherigen Zeitpunkt, den jeweiligen Markov-Ketten-Übertragungswahrscheinlichkeiten der beiden Filter und den jeweiligen Auswahlwahrscheinlichkeiten der beiden Filter zu dem vorherigen Zeitpunkt berechnet wird;

ein fünftes Berechnungsmodul zum Berechnen eines Positionierungsdaten-Vorhersagewertes für jeden der beiden Filter zum aktuellen Zeitpunkt; und

ein Erhaltungsmodul zum Erhalten von jeweiligen vorläufigen Filterungsergebnissen der beiden Filter zum aktuellen Zeitpunkt, indem jeder der beiden Filter verwendet wird, um den Positionierungsdaten-Vorhersagewert für den betreffenden Filter zum aktuellen Zeitpunkt zu filtern.

6. Einrichtung (400) nach Anspruch 5, wobei der Positionierungsdaten-Vorhersagewert für jeden der beiden Filter zum aktuellen Zeitpunkt basierend auf einem Positionierungsdaten-Vorhersagewert für den Filter zu dem vorherigen Zeitpunkt, dem berechneten gemischten Eingang für den Filter, einer gegebenen und unveränderlichen Übertragungsmatrix, einer gegebenen und unveränderlichen Beobachtungsmatrix und einem Gewinnkoeffizienten zum aktuellen Zeitpunkt berechnet wird.

7. Einrichtung (400) gemäß Anspruch 5, wobei das fünfte Berechnungsmodul umfasst:

   ein sechstes Berechnungsmodul zum Berechnen eines Hilfsberechnungswertes für jeden der beiden Filter zum aktuellen Zeitpunkt, wobei der Hilfsberechnungswert basierend auf einem Hilfsberechnungswert für den Filter zu dem vorherigen Zeitpunkt, dem berechneten gemischten Eingang für den Filter, einer gegebenen und unveränderlichen Übertragungsmatrix, einer gegebenen und unveränderlichen Beobachtungsmatrix und einem Gewinnkoeffizienten zum aktuellen Zeitpunkt berechnet wird; und

   ein erstes Bestimmungsmodul zum Bestimmen eines Positionierungsdaten-Vorhersagewertes für jeden der beiden Filter zum aktuellen Zeitpunkt, wobei der Positionierungsdaten-Vorhersagewert basierend auf den zu verarbeitenden Positionierungsdaten, dem Hilfsberechnungswert für den Filter zum aktuellen Zeitpunkt und einer gegebenen und unveränderlichen Messrauschkovarianz berechnet wird.

8. Einrichtung (400) gemäß Anspruch 6, wobei das erste Berechnungsmodul umfasst:

   ein siebtes Berechnungsmodul zum Berechnen jeweiliger Filterparameterwerte für die beiden Filter, wobei der Filterparameterwert für jeden der beiden Filter basierend auf den zu verarbeitenden Positionierungsdaten, dem Positionierungsdaten-Vorhersagewert für den Filter zum aktuellen Zeitpunkt und einer gegebenen und unveränderlichen Messrauschkovarianz berechnet wird; und

   ein zweites Bestimmungsmodul zum Bestimmen jeweiliger Auswahlwahrscheinlichkeiten der beiden Filter zum aktuellen Zeitpunkt, basierend auf den jeweiligen Filterparameterwerten für die beiden Filter und den jeweiligen Filterungsergebnis-Anteilen der beiden Filter zum aktuellen Zeitpunkt.

9. Maschinenlesbares Speichermedium mit einer ausführbaren Anweisung darauf; wenn die ausführbare Anweisung ausgeführt wird, wird eine Maschine veranlasst, das Verfahren nach einem der Ansprüche 1 - 4 auszuführen.

**Revendications**

1. Procédé informatisé de filtrage de données de positionnement, le procédé comprenant les étapes suivantes :

   recevoir des données de positionnement produites à un instant courant par un moteur de positionnement (20) ; et utiliser un modèle multiple d'interaction, IMM, composé de deux filtres différents pour filtrer les données de positionnement à traiter, afin d'obtenir des données de positionnement filtrées, les données de positionnement à traiter étant les données de positionnement reçues ou les données de positionnement obtenues par prétraitement des données de positionnement reçues, dans lequel l'étape comprenant d'utiliser un IMM composé de deux filtres différents pour filtrer les données de positionnement à traiter comprend les étapes suivantes :

   acquérir des résultats de filtrage préliminaires respectifs des deux filtres à l'instant courant, les résultats de filtrage préliminaires étant associés aux données de positionnement à traiter ;

calculer les probabilités respectives de sélection des deux filtres à l'instant courant, la probabilité de sélection de chaque filtre à l'instant courant représentant la probabilité que l'IMM sélectionne ledit filtre à l'instant courant ; et

calculer la somme des produits respectifs du résultat préliminaire du filtrage et de la probabilité de sélection de chacun des deux filtres à l'instant courant, pour servir de données de positionnement filtrées, **caractérisé en ce que** l'étape d'acquisition des résultats de filtrage préliminaires respectifs des deux filtres à l'instant courant comprend les étapes suivantes :

sur la base des probabilités respectives de transfert de chaîne de Markov des deux filtres et des probabilités respectives de sélection des deux filtres à un moment précédent l'instant courant, calculer les proportions respectives des résultats de filtrage des deux filtres à l'instant courant, où la proportion de résultats de filtrage de l'un ou l'autre des deux filtres à l'instant courant représente la proportion de la somme des résultats de filtrage des deux filtres à l'instant courant qui est constituée par le résultat de filtrage de l'un ou l'autre des deux filtres à l'instant courant ;

calculer des entrées mixtes respectives pour les deux filtres, l'entrée mixte pour chaque filtre étant calculée sur la base des données de positionnement à traiter, d'un résultat de filtrage préliminaire dudit filtre à l'instant précédent, des probabilités de transfert de chaîne de Markov respectives des deux filtres et des probabilités de sélection respectives des deux filtres à l'instant précédent ;

calculer une valeur de prédiction de données de positionnement pour chacun des deux filtres à l'instant courant ; et

obtenir des résultats de filtrage préliminaires respectifs des deux filtres à l'instant courant, en utilisant chacun des deux filtres pour filtrer la valeur de prédiction de données de positionnement pour ledit filtre à l'instant courant.

2. Procédé selon la revendication 1, dans lequel la valeur de prédiction de données de positionnement pour chacun des deux filtres à l'instant courant est calculée sur la base d'une valeur de prédiction de données de positionnement pour ledit filtre à l'instant précédent, de l'entrée mixte calculée pour ledit filtre, d'une matrice de transfert donnée et immuable, d'une matrice d'observation donnée et immuable, et d'un gain de coefficient à l'instant courant.

3. Procédé selon la revendication 1, dans lequel l'étape de calcul d'une valeur de prédiction de données de positionnement pour chacun des deux filtres à l'instant courant comprend les étapes suivantes :

calculer une valeur de calcul auxiliaire pour chacun des deux filtres à l'instant courant, la valeur de calcul auxiliaire étant calculée sur la base d'une valeur de calcul auxiliaire pour ledit filtre à l'instant précédent, de l'entrée mixte calculée pour ledit filtre, d'une matrice de transfert donnée et immuable, d'une matrice d'observation donnée et immuable, et d'un gain de coefficient à l'instant courant ; et

déterminer une valeur de prédiction de données de positionnement pour chacun des deux filtres à l'instant présent, la valeur de prédiction de données de positionnement étant calculée sur la base des données de positionnement à traiter, de la valeur de calcul auxiliaire pour ledit filtre à l'instant présent et d'une covariance de bruit de mesure donnée et immuable.

4. Procédé selon la revendication 2, dans lequel l'étape de calcul des probabilités respectives de sélection des deux filtres à l'instant courant comprend les étapes suivantes :

calculer des valeurs de paramètre de filtrage respectives pour les deux filtres, la valeur de paramètre de filtrage pour chacun des deux filtres étant calculée sur la base des données de positionnement à traiter, de la valeur de prédiction de données de positionnement pour ledit filtre à l'instant courant, et d'une covariance de bruit de mesure donnée et immuable ; et

sur la base des valeurs respectives des paramètres de filtrage pour les deux filtres et des proportions respectives des résultats de filtrage des deux filtres à l'instant courant, déterminer les probabilités respectives de sélection des deux filtres à l'instant courant.

5. Appareil (400) pour filtrer des données de positionnement, l'appareil comprenant :

un module de réception (402) destiné à recevoir des données de positionnement émises à un instant courant par un moteur de positionnement ; et

un module de filtrage (406) destiné à utiliser un modèle multiple d'interaction (IMM) composé de deux filtres différents pour filtrer les données de positionnement à traiter, afin d'obtenir des données de positionnement filtrées,

un module de prétraitement destiné à prétraiter les données de positionnement reçues, afin d'obtenir les données de positionnement à traiter,

dans lequel le module de filtrage (406) comprend :

un module d'acquisition destiné à acquérir des résultats de filtrage préliminaires respectifs des deux filtres à l'instant courant, les résultats de filtrage préliminaires étant associés aux données de positionnement à traiter ;

un premier module de calcul destiné à calculer les probabilités respectives de sélection des deux filtres à l'instant courant, la probabilité de sélection de chaque filtre à l'instant courant représentant la probabilité que l'IMM sélectionne ledit filtre à l'instant courant ; et

un deuxième module de calcul destiné à calculer la somme des produits respectifs du résultat préliminaire du filtrage et de la probabilité de sélection de chacun des deux filtres à l'instant courant, pour servir de données de positionnement filtrées,

**caractérisé en ce que** le module d'acquisition (406) comprend :

un troisième module de calcul destiné à calculer les proportions respectives de résultats de filtrage des deux filtres à l'instant courant, sur la base des probabilités respectives de transfert de chaîne de Markov des deux filtres et des probabilités respectives de sélection des deux filtres à l'instant précédent l'instant courant, où la proportion de résultats de filtrage de l'un ou l'autre des deux filtres à l'instant courant représente la proportion de la somme des résultats de filtrage des deux filtres à l'instant courant qui est constituée par le résultat de filtrage de l'un ou l'autre des deux filtres à l'instant courant ;

un quatrième module de calcul destiné à calculer des entrées mixtes respectives pour les deux filtres, l'entrée mixte pour chaque filtre étant calculée sur la base des données de positionnement à traiter, d'un résultat de filtrage préliminaire dudit filtre à l'instant précédent, des probabilités de transfert de chaîne de Markov respectives des deux filtres et des probabilités de sélection respectives des deux filtres à l'instant précédent ;

un cinquième module de calcul destiné à calculer une valeur de prédiction de données de positionnement pour chacun des deux filtres à l'instant courant ; et

un module d'obtention destiné à obtenir des résultats de filtrage préliminaires respectifs des deux filtres à l'instant courant, en utilisant chacun des deux filtres pour filtrer la valeur de prédiction de données de positionnement pour ledit filtre à l'instant courant.

6. Appareil (400) selon la revendication 5, dans lequel
la valeur de prédiction de données de positionnement pour chacun des deux filtres à l'instant courant est calculée sur la base d'une valeur de prédiction de données de positionnement pour ledit filtre à l'instant précédent, de l'entrée mixte calculée pour ledit filtre, d'une matrice de transfert donnée et immuable, d'une matrice d'observation donnée et immuable, et d'un gain de coefficient à l'instant courant.

7. Appareil (400) selon la revendication 5, dans lequel le cinquième module de calcul comprend :

un sixième module de calcul destiné à calculer une valeur de calcul auxiliaire pour chacun des deux filtres à l'instant courant, la valeur de calcul auxiliaire étant calculée sur la base d'une valeur de calcul auxiliaire pour ledit filtre à l'instant précédent, de l'entrée mixte calculée pour ledit filtre, d'une matrice de transfert donnée et immuable, d'une matrice d'observation donnée et immuable, et d'un gain de coefficient à l'instant courant ; et

un premier module de détermination destiné à déterminer une valeur de prédiction de données de positionnement pour chacun des deux filtres à l'instant présent, la valeur de prédiction de données de positionnement étant calculée sur la base des données de positionnement à traiter, de la valeur de calcul auxiliaire pour ledit filtre à l'instant présent et d'une covariance de bruit de mesure donnée et immuable.

8. Appareil (400) selon la revendication 6, dans lequel le premier module de calcul comprend :

un septième module de calcul destiné à calculer des valeurs de paramètre de filtrage respectives pour les deux filtres, la valeur de paramètre de filtrage pour chacun des deux filtres étant calculée sur la base des données de positionnement à traiter, de la valeur de prédiction de données de positionnement pour ledit filtre à l'instant courant, et d'une covariance de bruit de mesure donnée et immuable ; et

un deuxième module de détermination destiné à déterminer les probabilités respectives de sélection des deux filtres à l'instant courant, sur la base des valeurs respectives des paramètres de filtrage pour les deux filtres et des proportions respectives des résultats de filtrage des deux filtres à l'instant courant.

9. Support de stockage lisible par machine, comprenant une instruction exécutable où, lorsque l'instruction exécutable est exécutée, une machine est amenée à exécuter le procédé selon l'une quelconque des revendications 1 à 4.

<u>10</u>

| | | |
|---|---|---|
| 20 | | 30 |

# Fig. 1

200

| | 202 |
| | 206 |
| | 210 |
| | 214 |
| | 218 |
| | 222 |
| | 226 |
| | 230 |
| | 234 |

# Fig. 2

300

| | 302 |
| | 306 |

# Fig. 3

400

402

406

**Fig. 4**

500

502

504

**Fig. 5**

600

602    606

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009243920 A1

- US 2017060810 A1

**Non-patent literature cited in the description**

- Robust MT tracking based on M-estimation and interacting multiple model algorithm. IEEE